# EUROPÄISCHE PATENTANMELDUNG

(11) **EP 4 613 660 A1**
(43) Veröffentlichungstag der Anmeldung: **10.09.2025**
(21) Anmeldenummer: 25159789.4
(22) Anmeldetag: 25.02.2025
(51) Int. Cl.: B65B 51/14, B65B 61/10

(54) **KAMMERMASCHINE MIT TRENNEINRICHTUNG SOWIE VERFAHREN ZUM ABTRENNEN EINES BEUTELHALSES**

(30) Priorität: 05.03.2024 DE 102024106240
(71) Anmelder: MULTIVAC Sepp Haggenmüller SE & Co. KG, 87787 Wolfertschwenden (DE)
(72) Erfinder: HIRSCHAUER, Alexander, 88299 Leutkirch (DE); FRÜHSAMMER, Florian, 87437 Kempten (DE); HÄRING, Rainer, 87761 Lauben (DE); FRIEDL, Jonas, 86971 Peiting (DE); BRUNNER, Maximilian, 87784 Westerheim (DE)
(74) Vertreter: Grünecker Patent- und Rechtsanwälte PartG mbB

(57) **Zusammenfassung**

Kammermaschine (1) zum Ablängen eines mit einem Produkt (P) befüllten Beutels (5), wobei die Kammermaschine (1) mindestens eine Trenneinrichtung (9) zum Abtrennen eines überflüssigen Beutelhalses (10) sowie zueinander beabstandete Klemmeinrichtungen (7) zum Klemmen eines Beutelabschnitts (8) aufweist, wobei die Trenneinrichtung (9) zwischen den Klemmeinrichtungen (7) positioniert ist, sodass innerhalb des mittels der beabstandeten Klemmeinrichtungen (7) geklemmten Beutelabschnitts (8) das Abtrennen des Beutelhalses (10) anhand der Trenneinrichtung (9) durchführbar ist, wobei die Kammermaschine (1) mindestens eine zwischen den Klemmeinrichtungen (7) positionierte Spanneinrichtung (11) zum Ausüben einer Spannkraft auf den mittels der beabstandeten Klemmeinrichtungen (7) geklemmten Beutelabschnitt (8) aufweist.

## Beschreibung

Die vorliegende Erfindung bezieht sich auf eine Kammermaschine gemäß Anspruch 1. Ferner betrifft die Erfindung ein Verfahren zum Abtrennen eines an einem mit einem Produkt befüllten Beutel vorhandenen, überflüssigen Beutelhalses gemäß Anspruch 13.

In der Praxis werden bereits halbautomatische Kammermaschinen eingesetzt, die als Kammervakuumierer konfiguriert sind. Bei diesen Maschinen wird innerhalb eines hermetisch dichten Raumes ein definierter Unterdruck erzeugt. Dadurch wird die vorhandene Atmosphäre aus der Vakuumkammer, dem darin aufgenommen Beutel und aus den Zwischenräumen des Packguts entfernt. Nach dem Siegeln und Belüften der Kammer erhält man eine Vakuumverpackung, die herkömmlicherweise mit einer Doppelnaht-Trennsiegelung ausgebildet ist. Bei dieser Art der Trennsiegelung liegt zusätzlich zur Siegelnaht eine separate, davon beabstandete Trennnaht vor. Entlang dieser Trennnaht lässt sich ein offener Beutelüberstand bzw. ein überflüssiger Beutelhals händisch abreißen. Durch diesen manuellen Eingriff wird jedoch personalbedingt der Herstellungsaufwand erhöht.

Abgesehen von der vorangehend beschriebenen, halbautomatischen Lösung zum Abtrennen des überflüssigen Beutelüberstandes werden in der Praxis auch automatisierte Kammermaschinen mit Schneidmessern eingesetzt, welche dazu in der Lage sind, einen geklemmten Beutelhals gleich innerhalb der Siegelkammer abzutrennen, wodurch sich der mit Produkt befüllte Beutel auf ein vorbestimmtes Maß kürzen lässt. Mit derartigen Schneidmessern besteht jedoch das Problem, dass diese sich nicht ausreichend zuverlässig zum Abschneiden von Beutelüberständen eignen, wenn die Beutel aus einem elastischen Material hergestellt sind.

Der Erfindung liegt die Aufgabe zugrunde, hinsichtlich der in Zusammenhang mit dem vorangehend beschriebenen Stand der Technik einhergehenden Probleme eine Kammermaschine sowie ein Verfahren zum verbesserten Ablängen von mit Produkt beladenen Beuteln zu ermöglichen.

Diese Aufgabe wird mittels einer Kammermaschine nach Anspruch 1 gelöst. Ferner wird die Aufgabe anhand eines Verfahrens nach Anspruch 13 gelöst.

Vorteilhafte Weiterbildungen der Erfindung sind durch die jeweiligen Gegenstände der Unteransprüche gegeben.

Die Erfindung betrifft eine Kammermaschine zum Ablängen eines mit einem Produkt befüllten Beutels, wobei die Kammermaschine mindestens eine Trenneinrichtung zum Abtrennen eines überflüssigen Beutelhalses sowie zueinander beabstandete Klemmeinrichtungen zum Klemmen eines Beutelabschnitts aufweist. Die Trenneinrichtung ist zwischen den Klemmeinrichtungen positioniert, sodass innerhalb des mittels der beabstandeten Klemmeinrichtungen geklemmten Beutelabschnitts das Abtrennen des Beutelhalses anhand der Trenneinrichtung durchführbar ist. Die erfindungsgemäße Kammermaschine weist ferner mindestens eine zwischen den Klemmeinrichtungen positionierte Spanneinrichtung zum Ausüben einer Spannkraft auf den mittels der beabstandeten Klemmeinrichtungen geklemmten Beutelabschnitt auf. Damit lässt sich der geklemmte Beutelabschnitt für die Trenneinrichtung spannen, sodass die Trenneinrichtung zuverlässiger den Beutelhals vom Beutel abtrennen kann, selbst für den Fall, dass der Beutel aus einem elastischen Material, beispielsweise aus einer Schrumpffolie, hergestellt ist. Durch das Aufbringen der Spannkraft in den geklemmten, beidseitig mittels der Klemmeinrichtungen fixierten Beutelabschnitt, d.h. das Einwirken der Spannkraft auf den Beutel zwischen den Klemmlagern, wird der zwischen den Klemmlagern eingeklemmte Beutelabschnitt in Zugspannung versetzt, insbesondere sogar gedehnt, sodass er sich besser durchtrennen lässt. In anderen Worten kann der anhand der erfindungsgemäßen Spanneinrichtung beabstandet, geklemmte Beutelabschnitt zwischen den Klemmpunkten gedehnt werden. Dabei verlängert sich unter Belastung, sprich durch Einwirken der Spannkraft, das elastische Beutelmaterial des geklemmten Beutelabschnitts, wodurch es sich besser durchtrennen lässt.

Mittels der erfindungsgemäßen Spanneinrichtung kann der anhand der Klemmeinrichtungen geklemmte Beutelabschnitt für den mittels der Trenneinrichtung durchzuführenden Abtrennvorgang vorgespannt, insbesondere gedehnt werden. Damit ist es insbesondere möglich, elastisches Material derart unter Zugspannung vorzuhalten, dass es sich mittels der Trenneinrichtung zuverlässig ablängen lässt. Dies ist deshalb gewährleistet, weil die durch die Spanneinrichtung in das Beutelmaterial eingebrachten Kräfte, durch welche der Beutelabschnitt unter Zugspannung gesetzt wird, den Abtrennvorgang begünstigen. Damit einher geht der synergetische Effekt, dass die Trenneinrichtung mit geringeren Kräften auskommt, um den überflüssigen Beutelhals zuverlässig abzutrennen. Damit ergibt sich auch ein wirtschaftlicher und schonender Betrieb der Trenneinrichtung, sodass sie weniger stark abnutzt, woraus längere Standzeiten für die Trenneinrichtung resultieren. Dies begünstigt einen insgesamt kostengünstigeren Betrieb der Kammermaschine.

Von Vorteil ist auch, dass die erfindungsgemäße Lösung zum Ablängen des Beutels vollständig automatisierbar ist, sprich ohne manuellen Eingriff auskommt, sodass sich die erfindungsgemäße Lösung grundsätzlich auch besser dazu eignet, um in einer Produktionslinie integriert zum Einsatz zu kommen. Außerdem bietet die erfindungsgemäße Lösung den Vorteil, dass sich eine Abtrennlinie sehr nahe entlang einer Siegelnaht herstellen lässt. In anderen Worten bedeutet dies, dass ein offenes Beutelende ganz entfernt, oder zumindest weitestgehend verkürzt werden kann, was zu einer hygienisch verbesserten Beutelpackung führt.

Gemäß einer Variante der Erfindung ist vorgesehen, dass mindestens eine der beiden Klemmeinrichtungen durch eine Siegelschiene gebildet ist. Bei dieser Variante erfüllt die Siegelschiene damit eine Doppelfunktion, indem sie einerseits als Klemmeinrichtung gemeinsam mit der anderen Klemmeinrichtung zum Klemmen des Beutelabschnitts zusammenwirkt und andererseits als Werkzeug zum Verschließen des Beutels eingesetzt werden kann. Bei dieser Ausführungsform wird während eines Maschinearbeitstakts der Kammermaschine zunächst der Beutelabschnitt von der Siegelschiene sowie von der anderen Klemmeinrichtung geklemmt. Der somit geklemmte Beutelabschnitt kann anschließend anhand der erfindungsgemäßen Spanneinrichtung gespannt werden. Im gespannten Zustand des Beutelabschnitts kommt die Trenneinrichtung zum Einsatz, um das gespannte Beutelmaterial zu durchtrennen. Gleichzeitig zum Abtrennen oder im Anschluss an das Abtrennen des Beutelhalses übt die Siegelschiene ihre eigentliche Funktion, nämlich das Verschließen des Beutels durch Herstellung einer Siegelnaht aus. Wenn diese Prozessschritte in der vorangehend, beschriebenen Reihenfolge nacheinander ablaufen, sprich das Versiegeln des Beutels erst im Anschluss an das Abtrennen des Beutelhalses durchgeführt wird, ist es möglich, die Siegelnaht am bereits gekürzten, nicht mehr unter Zugspannung stehenden Beutelende herzustellen. Damit lässt sich eine qualitativ sehr präzise, insbesondere geradlinige Siegelnaht herstellen. Die andere Variante, gemäß welcher das Abtrennen des Beutelhalses und das Siegeln des Beutels gleichzeitig durchgeführt werden, bietet ggf. den Vorteil kürzerer Herstellungsintervalle. Das Erhitzen der Siegelschiene zum Herstellen der Siegelnaht kann mittels einer gesteuerten Bestromung der Siegelschiene derart kontrolliert werden, dass die Siegelschiene entweder zeitverzögert oder zeitgleich zum Abtrennen des Beutelhalses die Siegelnaht herstellt.

Alternativ zur oben beschriebenen Variante, wonach die Siegelschiene sowohl zum Klemmen als auch zum Siegeln des Beutels eingesetzt wird, wäre es vorstellbar, dass beide Klemmeinrichtungen als von der Siegelschiene gesondert ausgebildete Klemmeinrichtungen vorliegen. Bei dieser Variante käme die Siegelschiene als separates Siegelwerkzeug zwischen den beiden Klemmeinrichtungen zum Einsatz. Dieser gesonderte Aufbau ist für den Einsatz von Siegelschienengeometrien zweckmäßig, die zum Klemmen des Beutels ungeeignet sind. Hinzu kommt, dass diese Variante bestenfalls zu einem konstruktiv einfacheren Aufbau der Spanneinrichtung führt, weil diese dann gemeinsam mit der Siegelschiene verstellbar ist, wofür ein gemeinsamer Verstellantrieb ausreichend wäre. Denkbar wäre bspw. in diesem Zusammenhang, dass die Spanneinrichtung als ein der Siegelschiene mit einem gewissen Überstand vorauseilendes Werkzeug konfiguriert ist. Der von den Klemmeinrichtungen separate Aufbau der Siegelschiene ermöglicht es insbesondere auch, dass sich die Siegelschiene ggf. auf einem vorbestimmten Temperaturniveau halten lässt, bzw. nicht unter ein vorbestimmtes Temperaturniveau abkühlt, aus welchem heraus sie schneller ein zum Herstellen der Siegelnaht benötigtes Temperaturniveau erreichen kann. Dies sorgt für einen energieeffizienten Betrieb der Siegelschiene.

Vorzugsweise ist für die Spanneinrichtung eine Vertiefung vorgesehen, in welche die Spanneinrichtung pro Spannhub eindrückbar ist. Damit lässt sich der geklemmte Beutelabschnitt ausreichend spannen. Denkbar wäre es, dass die Vertiefung in einer der Spanneinrichtung gegenüberliegenden Gegendruckleiste oder in der Siegelschiene für eine gegenüberliegende Spanneinrichtung ausgebildet ist. In der letztgenannten Alternative sind die Spanneinrichtung und die Siegelschiene zueinander getrennt und gegenüberliegend verbaut. Bspw. kann die Siegelschiene im Aufbau eines Werkzeugoberteils und die Spanneinrichtung im Aufbau eines Werkzeugunterteils oder umgekehrt integriert sein. Bei jeglichen Varianten kann die Vertiefung einen Raum ausbilden, in welchen sich der geklemmte Beutelabschnitt mittels der Spanneinrichtung hineindrücken lässt. Dadurch, dass das Material durch die Klemmeinrichtungen fixiert ist, wird es durch das Eintauchen der Spanneinrichtung in die Vertiefung gedehnt. Das Abtrennen des Beutelhalses im Bereich des gespannten, d.h. gedehnten, Beutelabschnitts ist dann besonders zuverlässig möglich. Die Vertiefung kann in Form einer Kerbe oder einer schlitzförmigen Öffnung ausgebildet sein, in welche sich das Beutelmaterial zum Zwecke seiner Dehnung zwischen den Klemmpunkten mittels der Spanneinrichtung hineindrücken lässt.

Insbesondere geschieht das Abtrennen mittels der Trenneinrichtung derart, dass der abgetrennte, überflüssige Beutelhals den mit der Spanneinrichtung in Kontakt geratenen Beutelabschnitt enthält.

Eine Variante sieht vor, dass für die Trenneinrichtung eine Vertiefung vorgesehen ist, in welche die Trenneinrichtung pro Trennhub, insbesondere pro Siegelhub, eindrückbar ist. Diese Vertiefung kann in Form einer Kerbe oder einer schlitzförmigen Öffnung ausgebildet sein, entlang welcher sich eine mittels der Trenneinrichtung zu erzeugende Trennlinie präzise herstellen lässt. Vorstellbar wäre es, dass die Vertiefung für die Trenneinrichtung durch die Vertiefung für die Spanneinrichtung gebildet ist, in welche die Spanneinrichtung und die Trenneinrichtung nacheinander pro Arbeitszyklus eindrückbar sind, um das fixierte und gedehnte Beutelmaterial abzutrennen. Dies begünstigt ebenfalls einen sehr kompakten Aufbau.

Gemäß einer Ausführungsform der Erfindung ist die Spanneinrichtung relativ zur Siegelschiene mittels eines Aktors höhenverstellbar gelagert. Diese Variante kann beispielsweise mit der Ausführungsform zum Einsatz kommen, bei welcher die Siegelschiene sowohl als Klemmeinrichtung als auch zum Siegeln des Beutels eingesetzt wird. Dabei könnte bspw. die Spanneinrichtung mittels des Aktors, nachdem mittels der Siegelschiene der Beutelabschnitt geklemmt ist, aus einer ersten, ein- bzw. zurückgefahrenen Position heraus in eine zweite, ausgefahrene Position verstellt werden, um den geklemmten Beutelabschnitt zu spannen. Als Aktor kommt insbesondere ein pneumatischer oder elektrischer (Linear-)Antrieb in Frage. Denkbar wäre auch eine Kopplung des Aktors über ein Getriebe an mindestens der Spanneinrichtung.

Vorstellbar ist es, dass sich die Spanneinrichtung und die Trenneinrichtung gemeinsam mittels des Aktors verstellen lassen, wobei die Spanneinrichtung als eine der Trenneinrichtung vorauseilende Spanneinrichtung vorliegt, um den fixierten Beutelabschnitt mit einer vorbestimmten Dehnung zu beanspruchen, bevor daran der Abtrennvorgang stattfindet. Eine Variante sieht vor, dass ein Überstand der vorauseilenden Spanneinrichtung verstellbar ist, um den Dehnungsgrad für den Abtrennvorgang variieren zu können.

Denkbar wäre es, dass der zum Verstellen der Spanneinrichtung eingesetzte Aktor einen Kraftbegrenzer aufweist, sodass sich zuverlässig eine vorbestimmte Spannkraft im geklemmten Beutelabschnitt erreichen lässt.

Gemäß einer Ausführungsform ist vorgesehen, dass die Spanneinrichtung als eine der Siegelschiene vorauseilende, insbesondere federbelastete, Spanneinrichtung ausgebildet ist. Diese Variante ist insbesondere kostengünstig herstellbar, weil daran das Verstellen der Spanneinrichtung sowie das Verstellen der Siegelschiene sowie der Trenneinrichtung grundsätzlich mittels eines einzigen Aktors möglich ist. Eine der Siegelschiene vorauseilende Spanneinrichtung ist insbesondere in Zusammenhang mit der vorangehend beschriebenen Variante möglich, bei welcher beide Klemmeinrichtungen als von der Siegelschiene gesondert ausgebildete Klemmeinrichtungen vorliegen. Bei dieser Variante könnte bspw. die der Siegelschiene vorauseilende Spanneinrichtung an die Bewegung der Siegelschiene gekoppelt sein, sprich ohne zusätzlichen Aktor verstellt werden.

Eine vorteilhafte Variante sieht vor, dass die Spanneinrichtung zum Ausüben der Spannkraft mindestens ein sich in den geklemmten Beutelabschnitt hineindrückbares Spannelement aufweist. Ein derartiges Spannelement kann beispielsweise in Form eines stehend montierten, auf und ab verstellbaren Blechstreifens, in Form einzelner, insbesondere in Reihe zueinander angeordneter Andrückstifte, in Form eines Kamms, in Form eines waagrecht gespannten Drahts und/oder in Form eines Silikonprofils vorliegen. In diesem Zusammenhang wäre es denkbar, dass das Spannelement in einem vorausgehenden Arbeitsintervall außer zum Spannen des geklemmten Beutelabschnitts auch noch als Werkzeug zum Herstellen von Öffnungen im Beutelhals eingesetzt wird, um diesen mit Öffnungen für einen Evakuier- und/oder Begasungsprozess zu präparieren. Für diesen optionalen Anwendungsfall könnte das Spannelement zumindest abschnittsweise in Form eines Kamms konfiguriert sein.

Gemäß einer Ausführungsform der Erfindung umfasst die Trenneinrichtung einen bestrombaren, d.h. beheizbaren Trenndraht, wodurch sich der gespannte Beutelabschnitt besser abtrennen lässt. Insbesondere lässt sich der Trenndraht intervallweise beheizen. Der Trenndraht kann insbesondere unmittelbar neben der Siegelschiene, d.h. zwischen der Siegelschiene und der außenliegenden Klemmeinrichtung angeordnet sein. Zweckmäßig wäre es, den Trenndraht als integralen Bestandteil des Siegelwerkzeugs unmittelbar neben der daran gebildeten Siegelschiene anzuordnen, damit sich die Trennlinie direkt neben der mittels der Siegelschiene hergestellten Siegelnaht erzeugen lässt. Damit lassen sich Beutel herstellen, an denen das Beutelende unmittelbar an der Siegelnaht angrenzt. Es liegen damit keine offenen Enden vor, die sich als Sammelstelle für Verunreinigungen eignen.

Zweckmäßigerweise lässt sich das Bestromen des Trenndrahts derart zeitlich steuern, dass der Trenndraht ein zum Abtrennen des gespannten Beutelabschnitts gewünschtes Temperaturniveau, beispielsweise 100° C, erreicht und damit den Abtrennvorgang durchgeführt hat, bevor die Siegelschiene damit beginnt, die Siegelnaht herzustellen. Damit liegt für das Herstellen der Siegelnaht bereits ein abgelängtes Beutelende vor, sprich Beutelmaterial, welches nicht mehr gespannt ist. Damit wird die Herstellung der Siegelnaht besonders präzise.

Eine Variante der Erfindung sieht vor, dass die Trenneinrichtung eine unmittelbar an der Siegelschiene ausgebildete, zum Abtrennen des Beutelhalses beheizbare Trenngeometrie aufweist. Diese Trenngeometrie kann bspw. in Form einer an der Siegelschiene ausgebildeten, spitz zulaufenden Geometrie vorliegen, bspw. als Messerspitze, welche sich neben der herzustellenden Siegelnaht in das gespannte Beutelmaterial eindrücken lässt, um den gespannten Beutelhals vorab des Siegelns oder nachgehend dazu abzuschneiden. Die Trenngeometrie ist vorzugsweise beheizbar. Dafür kann eine Heizeinrichtung eingesetzt werden, die auch zum Aufheizen der Siegelschiene zum Einsatz kommt. Damit liegt die Trenngeometrie als beheiztes Schneidwerkzeug vor, um insbesondere dem Siegelvorgang vorauseilend das gespannte Beutelmaterial zu durchtrennen.

Insbesondere ist wenigstens eine der Klemmeinrichtungen federbelastet gelagert. Damit ist es möglich, die beiden Klemmeinrichtungen als der Spanneinrichtung, der Trenneinrichtung und/oder der Siegeleinrichtung vorauseilende Klemmeinrichtungen zu konfigurieren, wobei ein gesonderter Hub für die nacheilende Einheit bzw. nacheilenden Einheiten nicht notwendig ist, sprich deren Einsatz automatisch zeitverzögert nach dem Klemmen des Beutelabschnitts durch fortgesetztes Einfedern zustande kommt. Damit lässt sich der Beutelabschnitt zuverlässig für den nachfolgenden Spann-, Trenn- und/oder Siegelvorgang festklemmen.

Denkbar wäre es, dass an wenigstens einer der beiden Klemmeinrichtungen ein elastisches Gegendruckprofil, beispielsweise eine Silikonschnur, vorliegt. Damit ist es insbesondere möglich, den Beutel schonend, insbesondere rutschfest, zu klemmen, sodass daran keine Abdrücke entstehen, insbesondere eine exakte Trennlinie zustande kommt. Bevorzugterweise weist wenigstens eine der Klemmeinrichtungen auf einer zum Klemmen des Beutels genutzten Seite jeweils mindestens ein Anpresselement aus Kunststoff, bspw. aus Silikon, auf oder ist zumindest teilweise aus Kunststoff hergestellt. Diese Ausführungen begünstigen ebenfalls ein schonendes Klemmen des Beutels, sodass daran keine Abdrücke entstehen, und verhindern insbesondere ein Durchrutschen des Beutels beim Klemmen bzw. Spannen.

Eine zweckmäßige Variante sieht vor, dass wenigstens eine der beiden Klemmeinrichtungen mittels eines Aktors zum Ausüben einer vorbestimmten Klemmkraft zum Fixieren des Beutelabschnitts verstellbar ist. Dieser Aktor kann dafür mit einem Kraftbegrenzer ausgestattet sein.

Gemäß einer Variante der Erfindung weist die Kammermaschine zum Entfernen des abgetrennten Beutelhalses eine Ausfördereinrichtung, insbesondere eine Ausblaseinrichtung und/oder eine Absaugeinrichtung, auf. Damit lassen sich die abgetrennten Beutelhälse zügig entfernen, sodass Arbeitsintervalle an der Kammermaschine schneller nacheinander ablaufen können. Damit eignet sich die Kammermaschine auch besser für einen vollautomatisierten Betrieb.

Insbesondere ist die Kammermaschine zum Evakuieren und/oder Begasen des Beutels konfiguriert. Damit ist es möglich, die in den Beuteln aufgenommenen Produkte in einer gewünschten Atmosphäre zu verpacken.

Eine Variante sieht vor, dass die Klemmeinrichtungen, die Trenneinrichtung und/oder die Spanneinrichtung entweder als integrale Bestandteile eines Werkzeugoberteils oder als integrale Bestandteile eines Werkzeugunterteils vorliegen. Die Kammermaschine kann insbesondere ein höhenverstellbar gelagertes Werkzeugoberteil aufweisen, an welchem die Klemmeinrichtungen, die Siegelschiene, die Trenneinrichtung und die Spanneinrichtung als integrale Bestandteile vorgesehen sind. Dieser Aufbau ist insbesondere unabhängig davon, ob eine der beiden Klemmeinrichtungen durch die Siegelschiene gebildet ist oder ob die Siegelschiene als eine von den Klemmeinrichtungen gesondert ausgebildete Siegelschiene vorliegt. Das Werkzeugoberteils kann in Form eines Deckels gemeinsam mit dem Werkzeugunterteil eine Kammer ausbilden, innerhalb welcher gesiegelte und gekürzte Beutel herstellbar sind.

Eine vorteilhafte Ausführungsform sieht vor, dass die Kammermaschine in Form einer Kammerbandmaschine konfiguriert ist. Die Kammerbandmaschine verfügt vorzugsweise über ein Förderband, anhand dessen sich offene, mit Produkt beladene Beutel transportieren lassen. Insbesondere ist das Förderband dazu ausgebildet, die Beutel in eine zum Verschließen der Beutel verschließbare Kammer hinein zu befördern und darin hergestellte, versiegelte Beutel aus der Kammer wieder heraus zu befördern, sodass eine Zuführung offener Beutel sowie ein Abtransport versiegelter Beutel ohne manuellen Eingriff durch einen Bediener ablaufen kann.

Die Erfindung bezieht sich ferner auf eine Verpackungslinie, die mindestens eine erfindungsgemäße Kammermaschine sowie eine Schrumpf- und Trocknungseinrichtung aufweist. Die Kammermaschine, insbesondere in Form einer Kammerbandmaschine, die Schrumpf- und Trocknungseinrichtung können in dieser Reihenfolge in Produktionsrichtung hintereinander positioniert sein.

Die Erfindung bezieht sich ferner auf ein Verfahren zum Abtrennen eines an einem mit einem Produkt befüllten Beutel vorhandenen, überflüssigen Beutelhalses, wobei ein Beutelabschnitt des Beutels für das Abtrennen des Beutelhalses mittels zueinander beabstandeten Klemmeinrichtungen geklemmt wird. Erfindungsgemäß wird anhand einer zwischen den Klemmeinrichtungen positionierten Spanneinrichtung eine Spannkraft auf den geklemmten Beutelabschnitt ausgeübt, um den geklemmten Beutelabschnitt für eine Trenneinrichtung zu spannen. Indem der geklemmte Beutelabschnitt mittels der Spanneinrichtung an einer zwischen den Klemmeinrichtungen liegenden Stelle belastet wird, dehnt sich der geklemmte Beutelabschnitt. Infolge der Dehnung lässt sich das Material, insbesondere elastisches Material, besser schneiden. Damit ist es besser möglich, zuverlässig den Beutelhals zu durchtrennen, sprich den Beutel auf ein gewünschtes Beutelmaß zu kürzen.

Denkbar wäre es, dass eine der beiden Klemmeinrichtungen durch eine Siegelschiene gebildet wird, wobei das Klemmen des Beutelabschnitts, das Spannen des geklemmten Beutelabschnitts und das Abtrennen des Beutelhalses, insbesondere auch das Versiegeln des Beutels, in zeitlich aufeinander folgenden Schritten durchgeführt werden. Indem im besonderen Fall das Klemmen des Beutelabschnitts, das Spannen des geklemmten Beutelabschnitts, das Abtrennen des Beutelhalses und das Versiegeln des Beutels in dieser Reihenfolge in zeitlich aufeinander folgenden Schritten durchgeführt werden, ist es möglich das gespannte Beutelmaterial zu durchtrennen und erst anschließend die Siegelnaht im bereits gekürzten, d.h. dann nicht mehr unter Zugspannung stehenden Material herzustellen. Dies begünstigt die Herstellung einer qualitativ sehr hochwertigen Siegelnaht. Im anderen besonderen Anwendungsfall, bei welchem das Abtrennen des Beutelhalses und das Versiegeln des Beutels zeitgleich geschehen, sind kürzere Herstellungsintervalle möglich.

Eine Variante sieht vor, dass die Spanneinrichtung zum Ausüben der Spannkraft auf den geklemmten Beutelabschnitt zumindest teilweise in eine Vertiefung eingedrückt wird. Damit lässt sich der geklemmte Beutelabschnitt ebenfalls in die Vertiefung eindrücken, sprich um das Eintauchen in die Vertiefung verlängert bzw. gedehnt, wodurch sich insbesondere elastisches Beutelmaterial für den Abtrennvorgang spannen lässt. Das dadurch gedehnte Beutelmaterial kann dann zuverlässig anhand der Trenneinrichtung durchtrennt werden.

Die Erfindung wird anhand von in den Figuren gezeigten Ausführungsformen genauer erläutert. Es zeigen:
- Figur 1: eine Kammermaschine in schematischer, perspektivischer Darstellung,
- Figur 2: eine isoliert dargestellte Einrichtung der Kammermaschine zum Ablängen und Versiegeln eines in sie hinein transportierten Beutels in einer ersten, geöffneten Stellung,
- Figur 3: die Einrichtung aus Figur 2 in einer zweiten, geschlossenen Stellung, und
- Figur 4: eine Verpackungslinie in schematischer Darstellung.

Gleiche Komponenten sind in den Figuren durchgängig mit gleichen Bezugszeichen versehen.

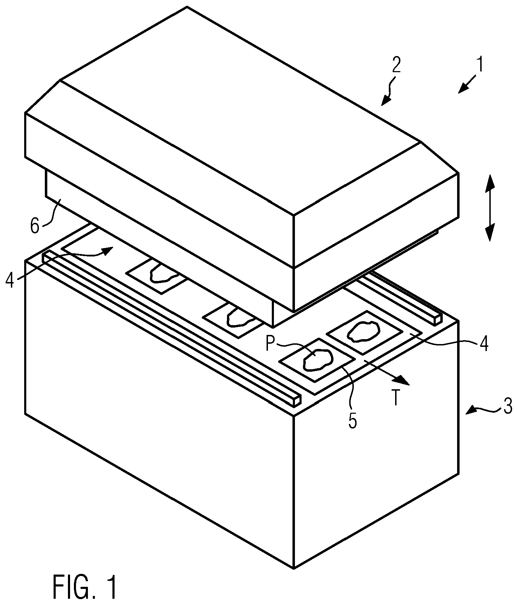

Figur 1 zeigt eine Kammermaschine 1 in perspektivisch, schematischer Darstellung. Die Kammermaschine 1 umfasst ein Werkzeugoberteil 2 und ein Werkzeugunterteil 3. Das Werkzeugoberteil 2 und das Werkzeugunterteil 3 sind so ausgestaltet, dass sie relativ zueinander bewegbar sind. Bspw. ist das Werkzeugunterteil 3 feststehend positioniert und das Werkzeugoberteil 2 auf das Werkzeugunterteil 3 zu und von diesem weg bewegbar gelagert. Es kann aber auch vorgesehen sein, dass das Werkzeugoberteil 2 feststehend ausgebildet ist und das Werkzeugunterteil 3 relativ zum Werkzeugoberteil 2 bewegbar gelagert ist. Weiterhin kann alternativ vorgesehen sein, dass sowohl das Werkzeugoberteil 2 als auch das Werkzeugunterteil 3 aufeinander zu und voneinander weg beweglich angeordnet sind.

Gemäß Figur 1 umfasst das Werkzeugunterteil 3 eine Transporteinrichtung 4 zum Transportieren wenigstens einer in Form eines Beutels 5 zu siegelnden Verpackung mit einem darin eingelegten Produkt P, bspw. eingelegtem Fleisch oder eingelegtem Käse. Die Transporteinrichtung 4 kann bspw. als Transportband zur Zuführung offener Beutel und Abführung gesiegelter Beutel ausgebildet sein. Mittels der Transporteinrichtung 4 lassen sich insbesondere mehrere Beutel 5 neben- und hintereinander in Transportrichtung T in eine verschließbare Kammer K der Kammermaschine 1 hinein und heraus transportieren.

Ferner zeigt Figur 1 eine Siegeleinrichtung 6, die am Werkzeugoberteil 2 angeordnet ist. Gemäß Figur 1 ist das Werkzeugoberteil 2 höhenverstellbar gelagert, sodass die daran montierte Siegeleinrichtung 6 zum Verschließen der innerhalb der Kammer K positionierten Beutel 5 ausgebildet ist.

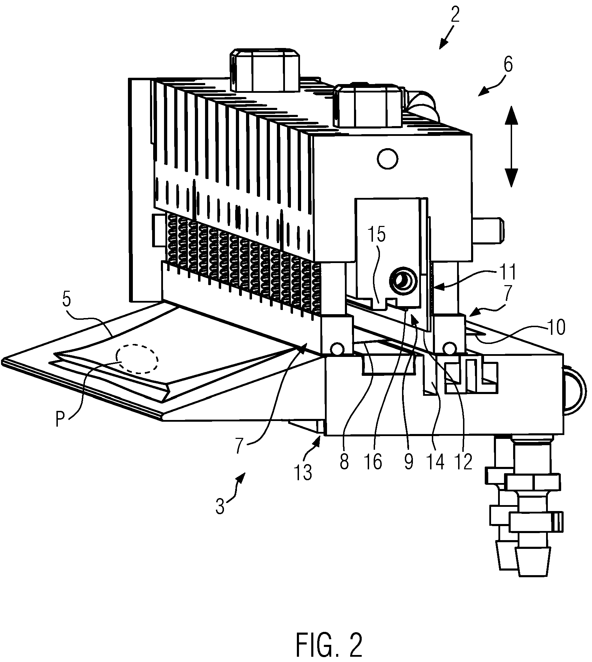

Figur 2 zeigt einen Teil der Siegeleinrichtung 6 in isolierter Darstellung. In Figur 2 ist die Siegeleinrichtung 6 in einer ersten Stellung, in welcher ein der Siegeleinrichtung 6 zugeführter Beutel 5 anhand von zwei, federbelasteten Klemmeinrichtungen 7 fixiert wird. Zwischen den beiden Klemmeinrichtungen 7, die zueinander beabstandet auf den Beutel 5 drücken, wird ein Beutelabschnitt 8 des Beutels 5 geklemmt.

Zum Abtrennen eines überflüssigen Beutelhalses 10 des Beutels 5 verfügt die Siegeleinrichtung 6 über eine Trenneinrichtung 9. Die Trenneinrichtung 9 ist zwischen den Klemmeinrichtungen 7 positioniert, sodass das Abtrennen des Beutelhalses 10 anhand der Trenneinrichtung 9 innerhalb des mittels der beabstandeten Klemmeinrichtungen 7 geklemmten Beutelabschnitts 8 durchführbar ist.

Als Hilfsmittel für die Trenneinrichtung 9 verfügt die Siegeleinrichtung 6 über eine Spanneinrichtung 11, die ebenfalls zwischen den Klemmeinrichtungen 7 positioniert ist. In Figur 2 liegt die Spanneinrichtung 11 als stehend montierter Blechstreifen vor, der eine dem geklemmten Beutelabschnitt 8 zugewandte, stumpfe Stoßkante 12 aufweist.

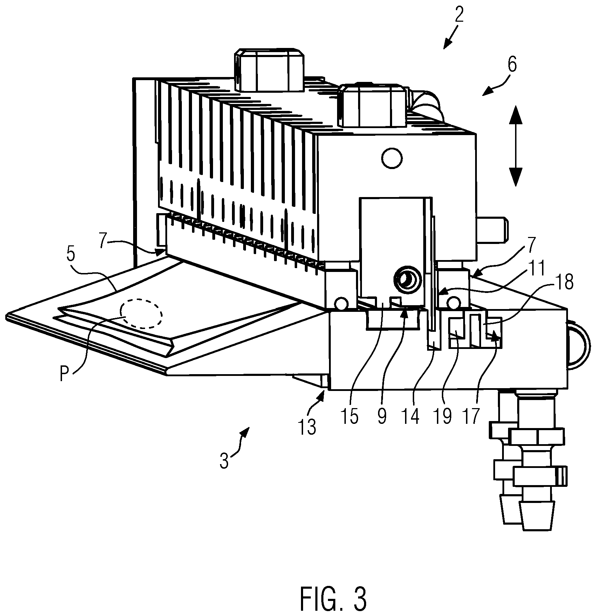

Das Werkzeugunterteil 3 verfügt über eine Gegendruckleiste 13 mit einer Vertiefung 14, in welche die Spanneinrichtung 11 pro Spannhub eindrückbar ist, um den geklemmten Beutelabschnitt 8 zu dehnen (siehe Figur 3). Weiter zeigt Figur 2 eine Siegelschiene 15 zwischen den beiden Klemmeinrichtungen 7. Die Siegelschiene 15 ist zum Herstellen einer Siegelnaht am Beutel 5 konfiguriert.

Die in Figur 2 gezeigte Ausführungsform sieht vor, dass die Klemmeinrichtungen 7 als von der Siegelschiene 15 gesondert ausgebildete Klemmeinrichtungen 7 vorliegen. Weiter zeigt Figur 2, dass die Spanneinrichtung 11 als eine der Trenneinrichtung 9 und der Siegelschiene 15 vorauseilende Spanneinrichtung 11 ausgebildet ist. Damit lässt sich das Spannen bzw. Dehnen des anhand der Klemmeinrichtungen 7 geklemmten Beutelabschnitts 8 vor dem Abtrennen des überflüssigen Beutelhalses 10 und auch vor dem Versiegeln des Beutels 5 durchführen, wenn die beiden Klemmeinrichtungen 7 gegen die Federung weiter eingefahren werden, sprich die Siegeleinrichtung 6 aus der in Figur 2 gezeigten Stellung in die in Figur 3 gezeigte Stellung verstellt wird.

Denkbar wäre es beim in Figur 2 gezeigten Aufbau auch, dass die Trenneinrichtung 9 als eine der Siegelschiene 15 vorauseilende Trenneinrichtung 9 konfiguriert ist. Damit ist es möglich, anhand des in Figur 2 gezeigten Aufbaus, das Spannen des geklemmten Beutelabschnitts 8, das Abtrennen des Beutelhalses 10 und das Herstellen der Siegelnaht mittels der Siegelschiene 15 in dieser Reihenfolge in aufeinanderfolgenden Schritten durchzuführen, sodass das Abtrennen des Beutelhalses 10 stattfindet, wenn der geklemmte Beutelabschnitt 8 gespannt ist, wobei die Herstellung der Siegelnaht mittels der Siegelschiene 15 zu einem anschließenden Zeitpunkt durchgeführt wird, wenn das abgelängte Beutelmaterial nicht mehr unter Spannung steht.

Angesichts der in Figur 2 gezeigten Ausführungsform, gemäß welcher die Trenneinrichtung 9 und die Siegelschiene 15 in etwa auf selber Höhe gelagert sind, wäre ein gleichzeitiges Abtrennen des Beutelhalses 10 sowie Herstellen der Siegelnaht denkbar.

In Figur 2 verfügt die Trenneinrichtung 9 über einen Trenndraht 16. Der Trenndraht 16 ist bestrombar, um auf ein gewünschtes Temperaturniveau gebracht werden zu können. Der Trenndraht 16 verläuft parallel zur Siegelschiene 15 und kann abweichend zur in Figur 2 gezeigten Darstellung auch näher an die Siegelschiene 15 herangerückt positioniert sein, um unmittelbar neben einer mittels der Siegelschiene 15 herzustellenden Siegelnaht eine Trennlinie am Beutel 5 zum Abtrennen des Beutelhalses 10 herzustellen. Anstelle des Trenndrahts 16 käme jedoch auch eine andere Trenngeometrie, insbesondere eine beheizbare Klinge infrage.

Figur 3 zeigt die Siegeleinrichtung 6 in einer zweiten Position, in welcher sie maximal mit der Gegendruckleiste 13 des Werkzeugunterteils 3 zusammengeführt ist. Dadurch werden die federbelasteten Klemmeinrichtungen 7 eingefahren, wodurch der Beutelabschnitt 8 mit ausreichender Klemmkraft geklemmt werden kann. Die Spanneinrichtung 11 ist in Figur 3 in die Vertiefung 14 eingetaucht, wodurch das zwischen den Klemmeinrichtungen 7 geklemmte Beutelmaterial in die Vertiefung 14 gedrückt und somit zwischen den Klemmeinrichtungen 7 verlängert wird. Mit Erreichen einer gewünschten Dehnung wird der Trenndraht 16 der Trenneinrichtung 9 bestromt, um den überflüssigen Beutelhals 10 abzutrennen. Gleichzeitig oder zeitlich verzögert findet das Herstellen der Siegelnaht mittels der Siegelschiene 15 statt.

Im Anschluss an das Versiegeln wird die in Figur 3 gezeigte Siegeleinrichtung 6 aufwärts verstellt, um den noch geklemmten, jedoch bereits getrennten Beutelhals 10 freizugeben. Der abgetrennte Beutelhals 10 kann dann mittels einer Ausfördereinrichtung 17, welche in Figur 3 als Ausblasleiste 18 vorliegt, abtransportiert werden, bspw. in einen Außenschacht der Kammermaschine 1 geblasen werden. Dafür kann die in Figur 3 gezeigte Ausblasleiste 18 unter Druckluftbelastung aus einer für sie in der Gegendruckleiste 13 ausgebildeten Aufnahme 19 bis auf Anschlag angehoben werden, um den abgetrennten Beutelhals 10 zur Seite hin wegzublasen.

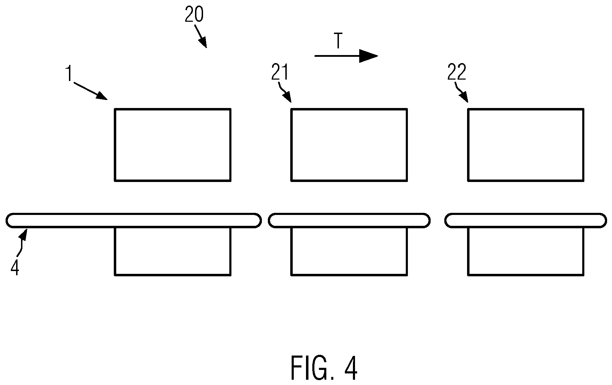

Figur 4 zeigt in schematischer Darstellung eine Verpackungslinie 20, die eine Kammermaschine 1 in Form einer Kammerbandmaschine sowie in Produktionsrichtung T dahinter eine Schrumpfeinrichtung 21 und eine Trocknungseinrichtung 22 aufweist. Die Schrumpfeinrichtung 21 kann insbesondere in Form eines Schrumpftunnels vorliegen, durch welchen sich gesiegelte Beutel 5 von der Kammermaschine 1 aus hindurch transportieren lassen, insbesondere in einem kontinuierlichen Lauf hindurch transportieren lassen, wobei die gesiegelten Beutel 5 im Schrumpftunnel mit heißem Wasser besprüht werden. Die Trocknungseinrichtung 21 kann als Trocknungstunnel konfiguriert sein, worin sich die aus dem Schrumpftunnel 21 kommenden, geschrumpften Beutel 5 im kontinuierlichen Lauf durch Gebläse mit kalter Luft trocknen lassen.

## Patentansprüche

1. Kammermaschine (1) zum Ablängen eines mit einem Produkt (P) befüllten Beutels (5), wobei die Kammermaschine (1) mindestens eine Trenneinrichtung (9) zum Abtrennen eines überflüssigen Beutelhalses (10) sowie zueinander beabstandete Klemmeinrichtungen (7) zum Klemmen eines Beutelabschnitts (8) aufweist, wobei die Trenneinrichtung (9) zwischen den Klemmeinrichtungen (7) positioniert ist, sodass innerhalb des mittels der beabstandeten Klemmeinrichtungen (7) geklemmten Beutelabschnitts (8) das Abtrennen des Beutelhalses (10) anhand der Trenneinrichtung (9) durchführbar ist, **dadurch gekennzeichnet, dass** die Kammermaschine (1) mindestens eine zwischen den Klemmeinrichtungen (7) positionierte Spanneinrichtung (11) zum Ausüben einer Spannkraft auf den mittels der beabstandeten Klemmeinrichtungen (7) geklemmten Beutelabschnitt (8) aufweist.

2. Kammermaschine nach Anspruch 1, **dadurch gekennzeichnet, dass** mindestens eine der beiden Klemmeinrichtungen (7) durch eine Siegelschiene (15) gebildet ist oder beide Klemmeinrichtungen (7) als von der Siegelschiene (15) gesondert ausgebildete Klemmeinrichtungen (7) vorliegen.

3. Kammermaschine nach Anspruch 1 oder 2, **dadurch gekennzeichnet, dass** für die Spanneinrichtung (11) eine Vertiefung (14) vorgesehen ist, in welche die Spanneinrichtung (11) pro Spannhub eindrückbar ist und/oder dass für die Trenneinrichtung (9) eine Vertiefung vorgesehen ist, in welche die Trenneinrichtung (9) pro Trennhub eindrückbar ist.

4. Kammermaschine nach Anspruch 2 oder 3, **dadurch gekennzeichnet, dass** die Spanneinrichtung (11) relativ zur Siegelschiene (15) mittels eines Aktors höhenverstellbar gelagert ist oder als eine der Siegelschiene (15) vorauseilende, insbesondere federbelastete Spanneinrichtung (11) ausgebildet ist.

5. Kammermaschine nach einem der vorangehenden Ansprüche, **dadurch gekennzeichnet, dass** die Spanneinrichtung (11) zum Ausüben der Spannkraft mindestens ein sich in den geklemmten Beutelabschnitt (8) hineindrückbares Spannelement (12) aufweist.

6. Kammermaschine nach einem der vorangehenden Ansprüche, **dadurch gekennzeichnet, dass** die Trenneinrichtung (9) einen bestrombaren Trenndraht umfasst und/oder dass die Trenneinrichtung (9) eine unmittelbar an der Siegelschiene (15) ausgebildete, zum Abtrennen des Beutelhalses (10) beheizbare Trenngeometrie aufweist.

7. Kammermaschine nach einem der vorangehenden Ansprüche, **dadurch gekennzeichnet, dass** wenigstens eine der Klemmeinrichtungen (7) federbelastet gelagert ist, für wenigstens eine der Klemmeinrichtungen (7) ein elastisches Gegendruckprofil vorliegt und/oder wenigstens eine der Klemmeinrichtungen (7) auf einer zum Klemmen des Beutels (5) genutzten Seite jeweils mindestens ein Anpresselement aus Kunststoff, beispielsweise aus Silikon, aufweist oder zumindest teilweise aus Kunststoff hergestellt ist.

8. Kammermaschine nach einem der vorangehenden Ansprüche, **dadurch gekennzeichnet, dass** die Kammermaschine (1) eine Ausfördereinrichtung (17), insbesondere eine Ausblaseinrichtung und/oder eine Absaugeinrichtung zum Entfernen des abgetrennten Beutelhalses (10) aufweist.

9. Kammermaschine nach einem der vorangehenden Ansprüche, **dadurch gekennzeichnet, dass** die Kammermaschine (1) zum Evakuieren und/oder Begasen des Beutels (5) konfiguriert ist.

10. Kammermaschine nach einem der vorangehenden Ansprüche, **dadurch gekennzeichnet, dass** die Klemmeinrichtungen (7), die Trenneinrichtung (9) und/oder die Spanneinrichtung (11) entweder als integrale Bestandteile eines Werkzeugoberteils (2) oder als integrale Bestandteile eines Werkzeugunterteils (3) vorliegen.

11. Kammermaschine nach einem der vorangehenden Ansprüche, **dadurch gekennzeichnet, dass** die Kammermaschine (1) in Form einer Kammerbandmaschine konfiguriert ist.

12. Verpackungslinie (20), umfassend eine Kammermaschine (1) nach einem der vorangehenden Ansprüche sowie eine Schrumpf- und Trocknungseinrichtung (21, 22).

13. Verfahren zum Abtrennen eines an einem mit einem Produkt (P) befüllten Beutel (5) vorhandenen, überflüssigen Beutelhalses (10), wobei ein Beutelabschnitt (8) des Beutels (5) für das Abtrennen des Beutelhalses (10) mittels zueinander beabstandeten Klemmeinrichtungen (7) geklemmt wird, **dadurch gekennzeichnet, dass** anhand einer zwischen den Klemmeinrichtungen (7) positionierten Spanneinrichtung (11) eine Spannkraft auf den geklemmten Beutelabschnitt (8) ausgeübt wird, um den geklemmten Beutelabschnitt (8) für eine Trenneinrichtung (9) zu spannen.

14. Verfahren nach Anspruch 13, **dadurch gekennzeichnet, dass** eine der beiden Klemmeinrichtungen (7) durch eine Siegelschiene (15) gebildet wird oder beide Klemmeinrichtungen (7) als von der Siegelschiene (15) gesondert ausgebildete Klemmeinrichtungen (7) gebildet werden, wobei das Klemmen des Beutelabschnitts (8), das Spannen des geklemmten Beutelabschnitts (8) und das Abtrennen des Beutelhalses (10), insbesondere auch das Versiegeln des Beutels (5), in zeitlich aufeinander folgenden Schritten durchgeführt werden.

15. Verfahren nach Anspruch 13 oder 14, **dadurch gekennzeichnet, dass** die Spanneinrichtung (11) zum Ausüben der Spannkraft auf den geklemmten Beutelabschnitt (8) in eine Vertiefung (14) eingedrückt wird.
